# EUROPÄISCHE PATENTSCHRIFT

(11) **EP 2 057 814 B1**
(45) Veröffentlichungstag und Bekanntmachung des Hinweises auf die Patenterteilung: **20.01.2010**
(21) Anmeldenummer: 07801835.5
(22) Anmeldetag: 23.08.2007
(51) Int. Cl.: H04L 29/06, G01M 17/007, G07C 5/00, G07C 5/08

(54) **SYSTEM AUS STEUERGERÄTEN IN EINEM KRAFTFAHRZEUG MIT GESCHÜTZTEM DIAGNOSEZUGRIFF**
SYSTEM OF CONTROL DEVICES IN A MOTOR VEHICLE WITH PROTECTED DIAGNOSTICS ACCESS
SYSTÈME COMPOSÉ DE MODULES DE COMMANDE DANS UN VÉHICULE AUTOMOBILE AVEC ACCÈS DE DIAGNOSTIC PROTÉGÉ

(30) Priorität: 31.08.2006 DE 102006040836
(43) Veröffentlichungstag der Anmeldung: 13.05.2009
(73) Patentinhaber: Bayerische Motoren Werke Aktiengesellschaft, 80809 München (DE)
(72) Erfinder: TORLO, Marc, 85551 Kirchheim (DE); WEINMANN, Ulrich, 85386 Eching (DE)
(74) Vertreter: Grüter, Klaus Peter
(86) Internationale Anmeldenummer: PCT/EP2007/007406
(87) Internationale Veröffentlichungsnummer: WO 2008/025477

(56) Entgegenhaltungen:
- WO-A-02/23801

## Beschreibung

Die Erfindung betrifft ein System aus Steuergeräten in einem Kraftfahrzeug, die über ein oder mehrere Datenbusse des Kraftfahrzeugs kommunizieren und das mindestens zwei Diagnosezugänge aufweist, über die der Zustand mindestens eines der Steuergeräte auf der Basis einer Diagnoseanforderungs-Nachricht diagnostiziert wird, insbesondere wird ein Fehlerspeichereintrag eines Steuergeräts über einen der Diagnosezugänge angefordert und nach außen übermittelt.

In heutigen Kraftfahrzeugen wird die Diagnosefähigkeit aller Steuergeräte in der Regel über einen zentralen Verbindungspunkt zum Fahrzeug realisiert und abgesichert. Der zentrale Verbindungspunkt ist im Fahrzeug angeordnet und damit ist der Zugriff bei einem verschlossenen Fahrzeug geschützt. Herstellerübergreifend existiert in der Regel ein Steuergerät, welches neben dem physikalischen Bereitstellen des Diagnosezuganges auch die Datenintegrität der Diagnosekommunikation und ggf. auch die Manipulationssicherheit der Diagnosekommunikation nach außen absichert. Existieren mehrere physikalische Zugänge, so sind diese nach bekanntem Stand der Technik unabhängig voneinander realisiert und abgesichert.

Ein solches System wird beispielsweise in WO 02/23801 offenbart.

Bei dieser Art, mehrere voneinander unabhängige Diagnosezugänge zu realisieren ergibt sich ein entsprechender Mehraufwand bei den Anforderungen an die Steuergeräte sowie bei der Implementierung. In jedem, mit einem Diagnosezugang ausgestatteten Steuergerät müssen entsprechende Integritätsprüfmechanismen und notwendige Methoden zum Schutz und zur Erkennung von möglichen Manipulationen von Diagnosekommunikation implementiert werden. Darüber hinaus müssen gegebenenfalls notwendige Ressourcen im relevanten Zugangssteuergerät hinsichtlich Rechenleistung, Datenpuffer usw. den Anforderungen entsprechend ausgewählt werden, welche die notwendige Leistungsfähigkeit aufweisen, um den entsprechenden Performance-/Schutzbedarf erfüllen zu können.

Bei einer drahtlosen Diagnosekommunikation, bei welcher durch externe Angreifer funkbasierte Datenpakete ohne physikalischen Zugriff ins Fahrzeug eingebracht und somit Informationen ausgelesen und möglicherweise verändert werden können, muss jedes per Funk übertragene Diagnosepaket gegen Verfälschung gesichert und die Authentizität von berechtigter, externer Diagnoseeinheit und/oder Fahrzeug verlässlich nachweisbar sein. Somit muss jedes per Funk übertragene Diagnosepaket einzeln auf Verfälschung und Authentizität hin überprüft und gegebenenfalls verworfen werden. Entsprechend sind extrem hohe Anforderungen an die Hardware des Steuergerätes, das den Diagnosezugang bereitstellt erforderlich, welche im Regelbetrieb (keine Diagnosekommunikation), d.h. während die Steuergeräte die ihnen zugedachten Funktionen beim Betrieb des Kraftfahrzeugs ausführen, nicht notwendig wären.

Aufgabe der vorliegenden Erfindung ist es, das bekannte System aus Steuergeräten in einem Kraftfahrzeug mit mindestens einem Diagnosezugang kostengünstiger zu gestalten.

Diese Aufgabe wird durch die im Anspruch 1 angegebenen Maßnahmen gelöst. Vorteilhafte Ausgestaltungen der Erfindung sind in den abhängigen Ansprüchen angegeben.

Im Gegensatz zur bekannten dezentralen Sicherheitsarchitektur, bei der in jedem Steuergerät mit Diagnosezugang eine Schutzeinrichtung vorzusehen ist, wird eine zentrale Schutzeinrichtung bzw. Prüf-Einrichtung vorgeschlagen. Zusätzlich ist erfindungsgemäß vorgesehen, dass eine Diagnoseanforderungs-Nachricht am Zugang zum erfindungsgemäßen System als solche erkannt und (bevorzugt unmittelbar) zur zentralen Prüf-Einrichtung zum Zwecke der Prüfung weitergeleitet wird.

Nach erfolgreicher Überprüfung werden die Diagnoseanforderungs-Nachrichten von der zentralen Instanz an die entsprechenden Zielsteuergeräte, deren Zustand diagnostiziert werden soll, weitergeleitet und dort abgearbeitet. Die entsprechenden Antworttelegramme bzw. Diagnose-Nachrichten werden der zentralen Prüf-Einrichtung bevorzugt ebenfalls zugeführt. Zudem werden die Diagnose-Nachrichten bevorzugt signiert und gegen Verfälschung und/oder Täuschung über den Absender geschützt, bevor sie der abfragenden externen Diagnose-Einrichtung übermittelt wird, falls zweckmäßig auch verschlüsselt.

Bevorzugt handelt es sich bei den erfindungsgemäßen Diagnosezugängen zumindest teilweise um drahtlose Zugänge zum System aus Steuergeräten, wie insbesondere des Typs D-CAN, WLAN, Kanal bzw. Frequenz über den der Fahrzeugschlüssel und das Fahrzeug im Zusammenhang mit der Aufhebung der Wegfahrsperre und/oder der Entriegelung der Fahrzeugtüren miteinander kommunizieren, GSM, TDMA oder einer Kombination hieraus.

Ein Ausführungsbeispiel der Erfindung wird nachfolgend anhand von Figuren näher erläutert. Gleiche Bezugszeichen bezeichnen gleiche oder gleichwirkende Funktionseinheiten. Es zeigen:

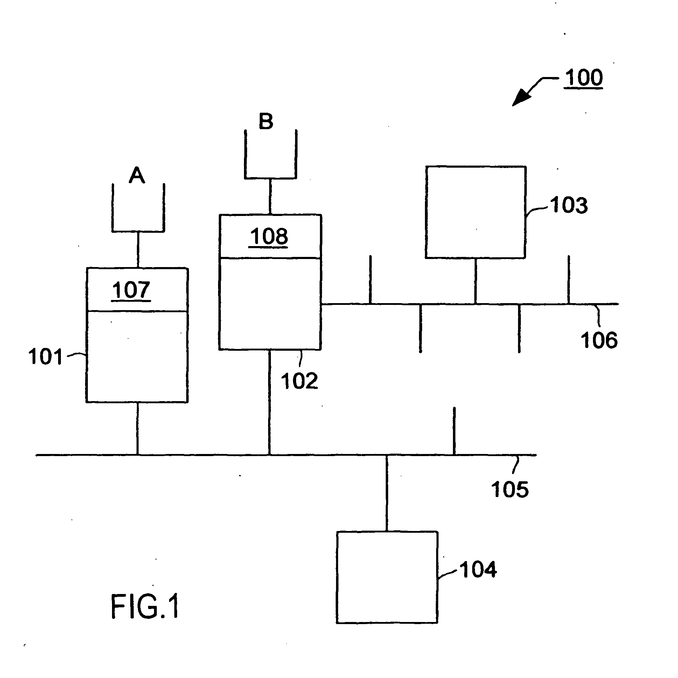

- Fig. 1: Ein bekanntes System aus Steuergeräten nach dem Stand der Technik, bei dem jeder Zugang einzeln abgesichert ist;
- Fig. 2: ein erfindungsgemäßes System, bei dem Diagnoseanforderungs-Nachrichten unabhängig vom Zugang zu einer zentralen Prüf-Einrichtung geleitet und dort überprüft werden; und
- Fig.3: den Weg einer Diagnoseanforderungs-Nachricht bei dem erfindungsgemäßen System der Figur 2 von einer externen Diagnose-Einrichtung zum Ziel-Steuergerät.

Ein bekanntes System 100 weist eine Vielzahl von Steuergeräten auf, von denen beispielhaft die Steuergeräte 101, 102, 103 und 104 dargestellt sind. Die Steuergeräte 101, 102 und 104 stehen mit einem ersten Datenbus 105 und die Steuergeräte 102 und 103 stehen mit dem zweiten Datenbus in unmittelbarer Verbindung. Das Steuergerät 102 hat also die Besonderheit, dass es mit beiden Datenbussen 105 und 106 in unmittelbarer Verbindung steht. Es handelt sich um ein sog. Zentrales Gateway Steuergerät. Die Steuergeräte 101 und 102 haben jeweils einen sog. "Software Security Layer" 107 bzw. 108, d.h. jeweils eine recht "grobe" Prüf-Einrichtung für Daten zur Verhinderung von Manipulationen an den Steuergeräten des Systems, die über den Zugang A bzw. den Zugang B unmittelbar zum Steuergerät 101 bzw. 102 gelangen.

Bei den Zugängen A und B handelt es sich um physikalische Zugänge, wie eine Diagnosebuchse, die gegen Zugriff geschützt im (ggf. verschlossenen) Fahrzeug angeordnet ist. Da die physikalischen Zugänge im Fahrzeug gegen unbefugten Zugriff geschützt sind, reicht ein recht einfacher Manipulationsschutz durch die Software Security Layer 107 bzw. 108, der den jeweiligen Prozessor der Steuergeräte 101 bzw. 102 bei der Durchführung einer Diagnose der Steuergeräte über die Zugänge A und/oder B nur recht wenig belastet.

Insbesondere bei einer Gestaltung der Zugänge A und B für einen drahtlosen Zugang zu den Steuergeräten von außerhalb des Systems bzw. Fahrzeugs über eine externe Diagnose-Einrichtung erscheint ein weiter verbesserter Manipulationsschutz angeraten.

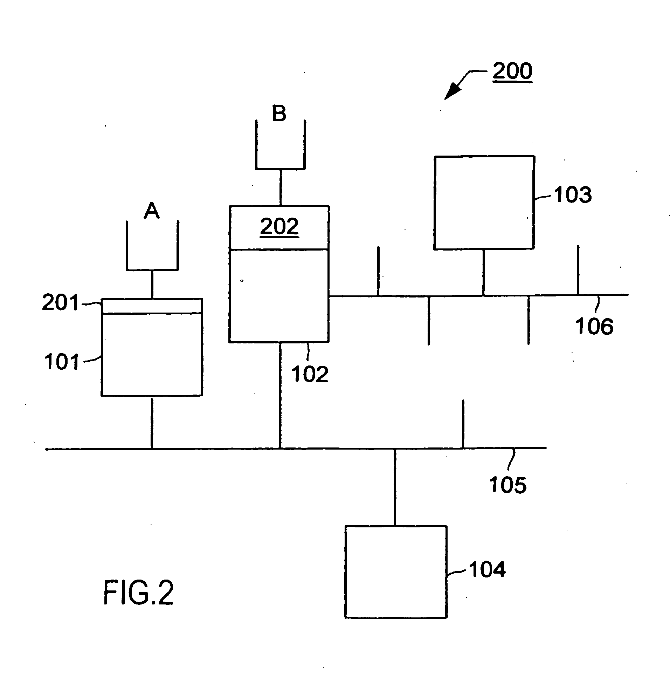

Fig. 2 zeigt ein erfindungsgemäßes System 200, das sich von dem bekannten System 100 darin unterscheidet, dass das Steuergerät 101 anstelle des Software Security Layers 107 eine programmtechnisch realisierte Erkennungs- und Weiterleitungs-Einrichtung 201 aufweist, d.h. erfindungsgemäß ist die Programmsteuerung des Prozessors (nicht dargestellt) des Steuergeräts 101 derart erweitert worden, dass der entsprechend programmgesteuerte Prozessor die Erkennungs- und Weiterleitungs-Einrichtung bildet.

Anstelle des Security Layers 108 ist erfindungsgemäß im Steuergerät bzw. Zentralen Gateway Steuergerät 102 eine programmtechnisch realisierte Prüf-Einrichtung 202 realisiert, d.h. die Programmsteuerung des Prozessors (nicht dargestellt) des Steuergeräts 102 ist derart erweitert worden, dass der entsprechend programmgesteuerte Prozessor die Prüf-Einrichtung bildet.

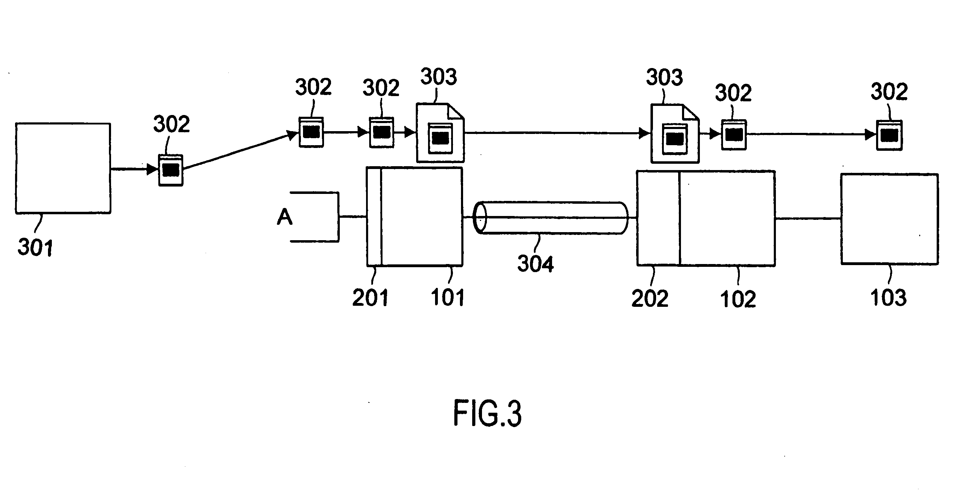

Die Funktion der Erkennungs- und Weiterleitungs-Einrichtung 201 und die der Prüf-Einrichtung 102 wird nachfolgend anhand der Figur 3 erläutert, wobei Figur 3 den Weg einer Diagnoseanforderungs-Nachricht im erfindungsgemäßen System von einer externen Diagnose-Einrichtung zum Ziel-Steuergerät zeigt.

Eine fahrzeug-externe Diagnose-Einrichtung 301 übermittelt drahtlos, im hier beschriebenen Ausführungsbeispiel über den Kommunikationskanal über den der Fahrzeugschlüssel mit dem Fahrzeug und umgekehrt im Zusammenhang mit der Aufhebung der elektronischen Wegfahrsperre und/oder der Entriegelung der Türen des Fahrzeugs kommuniziert, eine von ihr signierte Diagnoseanforderungs-Nachricht 302 an den Zugang A. Die Erkennungs- und Weiterleitungs-Einrichtung 201 erkennt, dass es sich um eine solche Nachricht handelt und kann beispielsweise im Rahmen einer ersten (groben) Prüfung ermitteln, ob die Signatur einer autorisierten Diagnose-Einrichtung zugeordnet werden kann. Hierzu ist nur eine geringe Prozessorleistung des Steuergeräts 101 erforderlich und der Prozessor (nicht dargestellt) des Steuergeräts 101, der erfindungsgemäß lediglich für die eigentliche Funktion des Steuergeräts dimensioniert ist, kann diese Überprüfung im Rahmen der Diagnose mit dieser zur Verfügung stehenden Prozessorleistung leisten.

Nach positiver (grober) Prüfung oder wenn diese nicht vorgesehen ist, nach der alleinigen Erkennung, dass es sich um eine Diagnoseanforderungs-Nachricht, wird die Diagnoseanforderungs-Nachricht 302 mit einer Information versehen, die die Diagnoseanforderungs-Nachricht 302 als solche kennzeichnet und eine Prüf-Einrichtungs-Adresse angibt. Die entsprechend gekennzeichnete und mit der Prüf-Einrichtungs-Adresse versehene Diagnoseanforderungs-Nachricht 302 wird im Folgenden als gekapselte Diagnoseanforderungs-Nachricht 303 bezeichnet. Auf der Basis der Prüf-Einrichtungs-Adresse wird die gekapselte Diagnoseanforderungs-Nachricht 303 unmittelbar über einen unmittelbaren Kommunikationsweg des Bus-Systems der Datenbusse 105 und 106, einem sog. Tunnel 304, der Prüf-Einrichtung 202 des Steuergeräts 102 (Zentrales Gateway Steuergerät) zugeleitet.

Die Prüf-Einrichtung entschlüsselt ggf. die gekapselte Diagnoseanforderungs-Nachricht 303, prüft die Signatur und die eigentliche Diagnoseanforderungs-Nachricht auf Unverfälschtheit und prüft, ob der Absender der Nachricht zur Vornahme zur Abfrage der Diagnose-Daten, insbesondere die Abfrage von Einträgen im Fehlerspeicher eines Steuergeräts, autorisiert ist.

Dies wird im Rahmen des bekannten Public-Key-Verfahrens durchgeführt bei dem auf den öffentlichen Schlüssel der fahrzeug-externen Diagnose-Einrichtung 301 zugegriffen wird. Dieser ist gegen Verfälschung gesichert in einem Speicher des Steuergeräts 102 gespeichert.

Sind die vorgenannten Prüfungen positiv verlaufen, wird die Diagnoseanforderungs-Nachricht 302 (oder ein Teil hiervon ohne die Signatur) an das Ziel-Steuergerät 103 über den Datenbus 106 geleitet und von dem Steuergerät 103 abgearbeitet.

Das Steuergerät 103 sendet die angeforderte Diagnose-Nachricht (nicht dargestellt) an die Prüf-Einrichtung 202, die die Diagnose-Nachricht wiederum im Rahmen eines Public-Key-Verfahrens signiert, ggf. verschlüsselt, und dem Zugang A zur drahtlosen Weiterleitung an die fahrzeug-externe Diagnose-Einrichtung 301, die beispielsweise bei der Reparaturannahme eines Fahrzeughändlers oder bei einem Fern-Reparatur-Service des Fahrzeugherstellers stehen kann, weitergeleitet wird. Bei der Signatur und/oder Verschlüsselung der Diagnose-Nachricht greift der Prozessor des Steuergeräts 102 auf den geheimen Schlüssel des Systems 200 bzw. Fahrzeugs zu. Auf der Basis der Verwendung des öffentlichen Schlüssels des Fahrzeugs bzw. Systems 200 kann die fahrzeug-externe Diagnose-Einrichtung 301 die Unverfälschtheit und die Authentizität bzw. den Absender der erhaltenen Diagnose-Nachricht überprüfen und ggf. entschlüsseln.

Durch die beschriebenen erfindungsgemäßen Maßnahmen kann eine kostengünstige, insbesondere drahtlose Diagnose der Steuergeräte eines Kraftfahrzeugs realisiert werden, die hohen Sicherheitsanforderungen genügt. Es ist lediglich eine zentrale Prüf-Einrichtung im erfindungsgemäßen System erforderlich, die die ggf. hohen Prozessorleistungen liefert. Zudem kann das bekannte Konzept einer Mehrzahl von externen Zugängen zum System beibehalten werden.

Bevorzugt stellt erfindungsgemäß das zentrale Gateway Steuergerät die Prüf-Einrichtung beim Diagnosevorgang bereit. Das zentrale Gateway Steuergerät stellt in der Regel im Gegensatz zu anderen Steuergeräten des Systems aufgrund der ihm zugedachten Funktionen während des Betriebs des Kraftfahrzeugs bereits eine hohe Prozessorleistung zur Verfügung, die beim Diagnosevorgang ohne zusätzliche Kosten zur Erreichung hoher Sicherheitsanforderungen an die Sicherheit gegen Manipulationen bei der Diagnose genutzt werden kann.

## Patentansprüche

1. System (200) aus Steuergeräten (101, 102, 103, 104) in einem Kraftfahrzeug, die über ein oder mehrere Datenbusse (105, 106) des Kraftfahrzeugs kommunizieren und das mindestens zwei Diagnosezugänge (A, B) aufweist, über die der Zustand mindestens eines der Steuergeräte auf der Basis einer Diagnoseanforderungs-Nachricht diagnostiziert wird, insbesondere wird ein Fehlerspeichereintrag eines Steuergeräts über einen der Diagnosezugänge angefordert und nach außen übermittelt, **dadurch gekennzeichnet, dass**
- eine dem System über den ersten Diagnosezugang (A) zugeführte Diagnoseanforderungs-Nachricht (302) als solche von einer Erkennungs- und Weiterleitungs-Einrichtung (201) erkannt und an eine Prüf-Einrichtung (202) übermittelt wird,
- die Prüf-Einrichtung (202) mindestens die Authentizität der Diagnoseanforderungs-Nachricht (302) prüft und ggf. an dasjenige Steuergerät (103) weiterleitet, für die die Diagnoseanforderungs-Nachricht (302) bestimmt ist.

2. System nach Anspruch 1, **dadurch gekennzeichnet, dass** der erste und/oder weitere Diagnosezugang (A, B) ein drahtloser Zugang zum System (200) bzw. Fahrzeug ist, wie insbesondere ein drahtloser Zugang des Typs D-CAN, WLAN, Kanal bzw. Frequenz über den der Fahrzeugschlüssel und das Fahrzeug im Zusammenhang mit der Aufhebung der Wegfahrsperre und/oder der Entriegelung der Fahrzeugtüren miteinander kommunizieren, GSM oder TDMA.

3. System nach Anspruch 1 oder 2, **dadurch gekennzeichnet, dass** die Prüf-Einrichtung (202) die Authentizität der Diagnoseanforderungs-Nachricht (302) auf der Basis einer Signatur der Diagnoseanforderungs-Nachricht und/oder anhand der konkreten Diagnoseariforderungs-Nachricht überprüft, ob der Absender der Diagnoseanforderungs-Nachricht hierzu berechtigt ist und/oder die Diagnoseanforderungs-Nachricht entschlüsselt.

4. System nach einem der Ansprüche 1 bis 3, **dadurch gekennzeichnet, dass** die Prüf-Einrichtung (202) einen programmgesteuerten Prozessor aufweist, der die Diagnoseanforderungs-Nachricht (302) bevorzugt anhand des Public-Key-Verfahrens prüft und hierbei auf einen öffentlichen Schlüssel zugreift, der im Fahrzeug bzw. in einem der Steuergeräte gegen Verfälschung gesichert gespeichert ist.

5. System nach einem der vorstehenden Ansprüche, **gekennzeichnet durch** ein zentrales Gateway-Steuergerät (102), das unmittelbar mit mindestens einem ersten und mit einem zweiten der Datenbusse (A, B) in Verbindung steht, und der Prozessor des Gateway-Steuergeräts zusammen mit einer entsprechenden Programmsteuerung die Prüf-Einrichtung (102) bildet.

6. System nach einem der vorstehenden Ansprüche, **dadurch gekennzeichnet, dass** die Diagnose-Nachricht eines der Steuergeräte (103) im Anschluss an die an das betreffende Steuergerät (103) übersandte Diagnoseanforderungs-Nachricht (302) an die Prüf-Einrichtung (102) übermittelt wird, diese die Diagnose-Nachricht mit einer Signatur versieht und/oder verschlüsselt und die entsprechende Diagnose-Nachricht über einen der Diagnose-Zugänge (A) von dem System (200) an eine externe Diagnose-Einrichtung (301) übertragen wird.

7. System nach Anspruch 6, **dadurch gekennzeichnet, dass** die Signatur und/oder Verschlüsselung der nach extern übertragenen Diagnose-Nachricht unter Verwendung des Public-Key-Verfahrens erfolgt und bevorzugt der geheime Schlüssel im Fahrzeug bzw. in einem der Steuergeräte (102) gegen Ausspähen und Verfälschung gesichert gespeichert ist.

8. System nach einem der vorstehenden Ansprüche, **dadurch gekennzeichnet, dass** bereits am Diagnosezugang eine erste Überprüfung (201) einer erhaltenen Diagnoseanforderungs-Nachricht (302) vorgenommen wird.

9. System nach Anspruch 8, **dadurch gekennzeichnet, dass** die Erkennungs- und Weiterleitungs-Einrichtung (201) die erste Überprüfung vornimmt, wobei bevorzugt die Signatur der Diagnoseanforderungs-Nachricht (302) überprüft wird.

10. System nach Anspruch 8 oder 9, **dadurch gekennzeichnet, dass** die Erkennungs- und Weiterleitungs-Einrichtung (201) durch ein Steuergerät (101) gebildet wird, das zwischen dem Diagnosezugang (A) und dem mindestens einen Datenbus (105) angeordnet ist und die Programmsteuerung des Prozessors des Steuergeräts (101) derart erweitert ist, dass die erste Überprüfung von dem Steuergerät bzw. von dessen Prozessor vorgenommen wird.

## Claims

1. A system (200) of control devices (101, 102, 103, 104) in a motor vehicle, which communicate via one or more data buses (105, 106) of the motor vehicle and which has at least two diagnostic accesses (A, B), via which the state of at least one of the control devices is diagnosed on the basis of a diagnostic request message, more especially, an error memory entry of a control device is requested via one of the diagnostic accesses and transmitted to the outside, **characterised in that**
- a diagnostic request message (302) supplied to the system via the first diagnostic access (A) is recognised as such by the identification and forwarding mechanism (201) and transmitted to a checking mechanism (202),
- the checking mechanism (202) at least checks the authenticity of the diagnostic request message (302) and optionally forwards it to that control device (103) for which the diagnostic request message (302) is intended.

2. A system according to claim 1, **characterised in that** the first and/or further diagnostic access (A, B) is a wireless access to the system (200) or vehicle, such as, more especially, a wireless access of the type D-CAN, WLAN, a channel or frequency via which the vehicle key and the vehicle communicate with one another in conjunction with the cancellation of the immobiliser and/or the unlocking of the vehicle doors, GSM or TDMA.

3. A system according to claim 1 or 2, **characterised in that** the checking mechanism (202) checks the authenticity of the diagnostic request message (302) on the basis of a signature of the diagnostic request message and/or using the specific diagnostic request message checks whether the sender of the diagnostic request message is authorised for this and/or deciphers the diagnostic request message.

4. A system according to any one of claims 1 to 3, **characterised in that** the checking mechanism (202) has a program-controlled processor which preferably checks the diagnostic request message (302) using the public key method and thus accesses a public key which is stored in the vehicle or in one of the control devices, secured against falsification.

5. A system according to any one of the preceding claims, **characterised by** a central gateway control device (102), which is directly connected to at least a first and a second of the data buses (A, B), and the processor of the gateway control device, together with a corresponding program control, forms the checking mechanism (102).

6. A system according to any one of the preceding claims, **characterised in that** the diagnostic message of one of the control devices (103), following the diagnostic request message (302) sent to the relevant control device (103), is transmitted to the checking mechanism (102), the latter provides the diagnostic message with a signature and/or encodes it and the corresponding diagnostic message is transmitted via one of the diagnostic accesses (A) from the system (200) to an external diagnostic mechanism (301).

7. A system according to claim 6, **characterised in that** the signature and/or encoding of the diagnostic message transmitted to the outside takes place using the public key method and the secret key is preferably stored in the vehicle or in one of the control devices (102), secured against spying and falsification.

8. A system according to any one of the preceding claims, **characterised in that** a first check (201) of a diagnostic request message (302) received is already carried out at the diagnostic access.

9. A system according to claim 8, **characterised in that** the identification and forwarding mechanism (201) carries out the first check, the signature of the diagnostic request message (302) preferably being checked.

10. A system according to claim 8 or 9, **characterised in that** the identification and forwarding mechanism (201) is formed by a control device (101), which is arranged between the diagnostic access (A) and the at least one data bus (105), and the program control of the processor of the control device (101) is extended in such a way that the first check is carried out by the control device or by its processor.

## Revendications

1. Système (200) composé de modules de commande (101, 102, 103, 104) d'un véhicule automobile, ces modules communiquant par l'intermédiaire d'un ou plusieurs bus de données (105, 106) du véhicule et le système comporte au moins deux accès de diagnostic (A, B) par lesquels se diagnostique l'état d'au moins l'un des modules de commande en fonction d'une information de requête de diagnostic, et notamment une demande d'un enregistrement de mémoire de défaut d'un module de commande se fait par l'un des accès de diagnostic et se transmet vers l'extérieur,
système **caractérisé en ce qu'**
- une information de requête de diagnostic (302) appliquée au système par l'intermédiaire du premier accès de diagnostic (A) est reconnue comme telle par une installation de reconnaissance et de transmission (201) et elle est transmise à une installation de contrôle (202),
- l'installation de contrôle (202) vérifie au moins l'authenticité de l'information de requête de diagnostic (302) et la transmet le cas échéant à celui des modules de commande (103) auquel est destinée cette information de requête de diagnostic (302).

2. Système selon la revendication 1,
**caractérisé en ce que**
le premier et/ou l'autre accès de diagnostic (A, B) est un accès sans fil au système (200) ou au véhicule, notamment sous la forme d'un accès sans fil de type D-CAN, WLAN, le canal ou la fréquence par lesquels la clef du véhicule et le véhicule en liaison avec la neutralisation du verrou de déplacement et/ou du déverrouillage des portières du véhicule, GSM ou TDMA.

3. Système selon la revendication 1 ou 2,
**caractérisé en ce que**
l'installation de contrôle (202) vérifie l'authenticité de l'information de requête de diagnostic (302) sur le fondement d'une signature de l'information de requête de diagnostic et/ou à l'aide de l'information pratique de requête de diagnostic, pour déterminer si l'émetteur de l'information de requête de diagnostic y est autorisé et/ou si l'information de requête de diagnostic a été décodée.

4. Système selon les revendications 1 à 3,
**caractérisé en ce que**
l'installation de contrôle (202) comporte un processeur commandé par programme, qui vérifie l'information de requête de diagnostic (302) de préférence à l'aide du procédé de clef publique (Public-Key), et accède ainsi à une clef publique mémorisée de façon protégée contre les falsifications dans le véhicule ou dans l'un des modules de commande.

5. Système selon les revendications précédentes,
**caractérisé par**
un module de commande central d'accès (102), relié par au moins un premier et un second bus de données (A, B), et le processeur du module de commande d'accès forme l'installation de contrôle (102) avec une commande de programme appropriée.

6. Système selon les revendications précédentes,
**caractérisé en ce que**
l'information de diagnostic de l'un des modules de commande (103) en liaison avec l'information de requête de diagnostic (302) transmise au module de commande concerné (103), est transmise à l'installation de contrôle (102) qui attribue une signature à cette information de diagnostic et/ou son codage et l'information de diagnostic correspondante est transmise par l'un des accès de diagnostic (A) du système (200) à une installation externe de diagnostic (301).

7. Système selon la revendication 6,
**caractérisé en ce que**
la signature et/ou le codage de l'information de diagnostic transmise à l'extérieur se font en utilisant le procédé de clef publique et de préférence la clef secrète est enregistrée de manière protégée dans le véhicule ou dans l'un des appareils de commande (102) contre l'accès et la falsification.

8. Système selon les revendications précédentes,
**caractérisé en ce que**
dès l'accès au diagnostic, on effectue une première vérification (201) d'une information de requête de diagnostic (302) telle que reçue.

9. Système selon la revendication 8,
**caractérisé en ce que**
l'installation de reconnaissance et de transmission (201) effectue une première vérification en vérifiant notamment la signature de l'information de requête de diagnostic (302).

10. Système selon la revendication 8 ou 9,
**caractérisé en ce que**
l'installation de reconnaissance et de transmission (201) est formée par un module de commande (101) installé entre l'accès de diagnostic (A) et au moins un bus de données (105), et la commande de programme du processeur du module de commande (101) est étendue pour que le premier contrôle soit effectué par l'appareil de commande ou par son processeur.
